# EUROPÄISCHE PATENTSCHRIFT

(11) **EP 0 634 431 B1**
(45) Veröffentlichungstag und Bekanntmachung des Hinweises auf die Patenterteilung: **13.01.1999**
(21) Anmeldenummer: 94110849.0
(22) Anmeldetag: 13.07.1994
(51) Int. Cl.: C08G 18/12, C08G 18/10, C08G 18/80, C08G 18/08, C09D 175/04

(54) **Wässrige Dispersion von Polyurethanharzen, Verfahren zu deren Herstellung, diese enthaltende Überzugsmittel und deren Verwendung**
Aqueous dispersion of polyurethane resins, process for their preparation, coating compositions containing them and their use
Dispersion aqueuse de résines de polyuréthane, procédé de leur préparation, compositions de revêtement contenant celles-ci et leur utilisation

(30) Priorität: 16.07.1993 DE 4323896
(43) Veröffentlichungstag der Anmeldung: 18.01.1995
(73) Patentinhaber: Herberts Gesellschaft mit beschränkter Haftung, 42285 Wuppertal (DE)
(72) Erfinder: Göbel, Armin, D-45549 Hasslinghausen (DE); Patzschke, Hans-Peter, Dr., D-42279 Wuppertal (DE)
(74) Vertreter: Türk, Gille, Hrabal

(56) Entgegenhaltungen:
- EP-A- 0 000 568
- EP-A- 0 404 371
- DE-A- 3 903 804

## Beschreibung

Die Erfindung betrifft wäßrige Dispersionen harnstoffgruppenfreier, ionische Gruppen enthaltender Polyurethanharze, die als Bindemitteldispersionen für Überzugsmittel verwendet werden können. Die Erfindung betrifft auch die Herstellung der Dispersionen sowie diese enthaltende Überzugsmittel und deren Verwendung.

Der Einsatz von Bindemitteln, die nach Neutralisation in Wasser verdünnbar sind, ist für die Lackiertechnik von hoher Bedeutung. In der Literatur werden z.B. auch Polyurethandispersionen beschrieben, die als Bindemittel in der Lackindustrie allgemeine Verwendung finden. Besonders bei der Mehrschichtlackierung zeigen Polyurethandispersionen als Bindemittel in Grundierungen, Basislacken oder Decklacken gute Eigenschaften. Dabei ist es üblich, daß bei Verwendung als Basislacke diese im Naß-in-naß-Verfahren mit Klarlacken überschichtet werden und danach eine gemeinsame Vernetzung der Schichten durch Einbrennen stattfindet.

Verschiedene Synthesemethoden zur Darstellung von wasserverdünnbaren Polyurethanharzen sind bekannt. Ein Problem der Synthese ist dabei die Erzielung eines hohen Molekulargewichts. Diese erfolgt im allgemeinen durch Bereitstellung von Präaddukten, die einer Kettenverlängerung unterzogen werden. In der EP-A-0 089 497 werden Dispersionen aus wasserlöslichen Isocyanatprepolymeren hergestellt, die durch Umsetzung in der Wasserphase mit Diaminketten verlängert werden. In der DE-A 39 15 459 werden isocyanat-terminierte Präaddukte hergestellt und diese nach Neutralisation in die Wasserphase überführt. Durch den Überschuß an Wasser in der Dispersionsphase tritt in den dispergierten Teilchen eine Kettenverlängerungsreaktion ein. In der DE-A-35 45 618 werden NCO-terminierte Prepolymere hergestellt und in die Wasserphase überführt. In diese werden dann wasserdispergierbare Polyole eingebracht. Diese setzen sich mit den NCO-Gruppen um und führen zu einer Erhöhung des Molekulargewichts.

Es hat sich jedoch gezeigt, daß bei diesen Kettenverlängerungsreaktionen von NCO-terminierten Umsetzungsprodukten in der Wasserphase schwer reproduzierbare Kettenverlängerungsreaktionen, und somit schwer reproduzierbare hohe Molekulargewichte auftreten.

In der DE-A-40 01 841 wird eine wäßrige Dispersion eines aminogruppenhaltigen Prepolymeren hergestellt. Dieses wird in der Wasserphase mit einem nicht wasserlöslichen Polyisocyanat umgesetzt und führt zu dem kettenverlängerten Polyurethanpolymeren. Die so erhaltenen Bindemittel haben den Nachteil, daß ein erhöhter Anteil von Harnstoffgruppen entsteht, die als harter Polymeranteil die Eigenschaften des Bindemittels negativ beeinflussen. In der DE-A-39 03 804 werden hydroxyl- und carboxylgruppenhaltige Polyester zu einem OH-gruppenhaltigen Polyurethanprepolymeren umgesetzt. Dieses Prepolymere wird in der Lösungsmittelphase mit Triisocyanaten zu teilweise vernetzten Produkten umgesetzt, danach mit Aminen neutralisiert und in die Wasserphase überführt. Ein Nachteil der so erhaltenen Bindemittel liegt darin, daß sie hydrolyseempfindlich sind, wodurch eine längere Lagerstabilität der wäßrigen Bindemitteldispersion beeinträchtigt wird.

Aufgabe der vorliegenden Erfindung ist es deshalb, eine wäßrige Polyurethanbindemitteldispersion zur Verfügung zu stellen, die in sicher reproduzierbarer Weise herstellbar ist und außerdem hydrolysestabil ist und eine gute Lagerstabilität aufweist.

Es hat sich gezeigt, daß diese Aufgabe gelöst werden kann durch die Bereitstellung von einen Gegenstand der Erfindung bildenden wäßrigen Dispersionen harnstoffgruppenfreier, ionische Gruppen enthaltender Polyurethanharze mit einem Zahlenmittel der Molmasse (Mn) von 10000 bis 300000 und einer Säurezahl von 5 bis 50, die erhältlich sind durch:

Bereitung einer OH-Gruppen enthaltenden Polyurethan-Prepolymeren mit einer OH-Zahl von 5 bis 75 und einem Zahlenmittel der Molmasse (Mn) von 5000 bis 50000, durch Umsetzung in organischem Medium von
A) einer oder mehreren mit Isocyanat reaktiven Verbindungen mit einer Säurezahl von 0 bis 10, in der Form von
   a) 70 bis 100 Gew.-% eines oder mehrerer Polyesterdiole, Polyetherdiole und/oder Polycarbonatdiole mit einem Molekulargewicht von 500 bis 6000, zusammen mit
   b) 30 bis 0 Gew.-% einer oder mehrerer von a) unterschiedlicher Verbindungen mit mindestens zwei mit Isocyant reaktiven Gruppen, mit einem Molekulargewicht von 40 bis 800, mit
B) einem oder mehreren, freie Isocyanatgruppen enthaltenden Reaktionsprodukten aus
   c) mindestens einer Verbindung mit zwei mit Isocyanat reaktiven . Gruppen und mindestens einer anionischen oder zur Anionenbildung befähigten Gruppe und
   d) einem oder mehreren organischen Diisocyanaten
   in einem derartigen Mengenverhältnis, daß das molare Verhältnis der mit Isocyanat reaktiven Gruppen von c) zu den Isocyanatgruppen von d) 1 : 1,0 bis 1 : 4,0, bevorzugt bis 1 : 3,0 besonders bevorzugt bis 1 : 2,5 beträgt, wobei das Reaktionsprodukt B) in Anwesenheit der Komponente A) hergestellt werden kann,
   wobei die Komponente B) in einer derartigen Menge eingesetzt wird, daß die fertigen Polyurethanharze die gewünschte Säurezahl aufweisen, und mit
C) einem oder mehreren Polyisocyanaten mit mindestens zwei freien Isocyanatgruppen pro Molekül, in einer derartigen Menge, daß das molare Verhältnis der OH-Gruppen der Komponente A) zu den NCO-Gruppen der Komponenten B) und C) 1,01 : 1 bis 3 : 1 beträgt,
   wobei die Komponenten A), Bc), Bd) und C), gleichzeitig miteinander umgesetzt werden können,
      worauf das aus A), B) und C) erhaltene Prepolymere vor oder nach der teilweisen oder vollständigen Neutralisation vorhandener in ionische Gruppen überführbarer Gruppen in dem organischen Medium oder nach Überführung in die Wasserphase einer Kettenverlängerung unterzogen wird durch Umsetzung mit
D) einem oder mehreren polyfunktionellen Isocyanaten mit einer Funktionalität an freien NCO-Gruppen von mindestens 1,8, in derartigen Anteilen, daß die fertigen Polyurethanharze das gewünschte Zahlenmittel der Molmasse aufweisen.

Einen weiteren Gegenstand der Erfindung bilden wäßrigen Überzugsmittel, die die erfindungsgemäßen Polyurethandispersionen enthalten, zusammen mit Pigmenten und/oder Füllstoffen, sowie gegebenenfalls lacküblichen Additiven, wie Verlaufsmitteln, Thixotropiermitteln und Netzmitteln; einem oder mehreren organischen Lösemitteln; sowie gegebenenfalls weiteren von den Polyurethandispersionen unterschiedlichen wasserdispergierbaren Bindemitteln und/oder Vernetzern.

Bei der zur Bereitung der erfindungsgemäßen wäßrigen Dispersionen verwendeten Komponente Aa) handelt es sich bevorzugt um eine lineare Polyolkomponente mit endständigen OH-Gruppen. Als Komponente a) können beispielsweise Polyetherpolyole der allgemeinen Formel I eingesetzt werden. 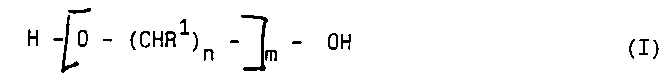 mit
- R¹ =: Wasserstoff oder ein niedriger Alkylrest (z.B. mit 1 bis 6 oder 1 bis 4 C-Atomen), gegebenenfalls mit einem oder mehreren Substituenten,
- n =: 2 bis 6, bevorzugt 3 - 4 und
- m =: mindestens 5, z.B. 5 bis 50.

Beispiele sind Poly(oxytetramethylen)glykole, Poly(oxyethylen)glykole und Poly(oxypropylen)glykole.

Vorzugsweise werden solche Polyetherpolyole mit einem Molekulargewicht im Bereich von 500 und 3000 verwendet, die ohne Mitverwendung von Ethylenoxid, das heißt insbesondere unter ausschließlicher Verwendung von Propylenoxid oder Tetrahydrofuran herstellbar sind. Die OH-Zahl beträgt bevorzugt 40 bis 220.

Die Komponente a) kann auch hydrophile Polyole umfassen mit einem oder zwei gegen Isocyanate reaktionsfähigen Wasserstoffatomen, die in der Seitenkette Ethylenoxid aufweisende Polyetherketten tragen oder Gemische davon. Diese bewirken eine bessere Dispergierung der Polyurethane in der Wasserphase.

Außerdem oder zusätzlich können Polyesterpolyole als Komponente a) verwendet werden. Man kann die Polyesterpolyole beispielsweise durch Veresterung von organischen Dicarbonsäuren oder ihren Anhydriden mit organischen Polyolen herstellen. Die Dicarbonsäuren und die Polyole können aliphatische oder aromatische Dicarbonsäuren und Polyole sein.

Die zur Herstellung der Polyester verwendeten Polyole sind z.B. Diole wie Alkylenglykole, beispielsweise Ethylenglykol, Butylenglykol, Neopentylglykol und andere Glykole wie Dimethylolcyclohexan. Daneben können auch geringe Mengen an höherfunktionellen oder Gemische aus höher- und monofunktionellen OH-Komponenten wie z.B. Trimethylolpropan, Pentaerythrit, Glycerin, Hexantriol; Polyether, die Kondensate von Glykolen mit Alkylenoxiden sind; Monoether solcher Glykole, wie Diethylenglykolmonoethylether, Tripropylenglykolmonomethylether eingesetzt werden.

Die Säurekomponente des Polyesters besteht bevorzugt in erster Linie aus niedermolekularen Dicarbonsäuren oder ihren Anhydriden mit 2 bis 18 Kohlenstoffatomen im Molekül.

Geeignete Säuren sind beispielsweise Phthalsäure, Isophthalsäure, Terephthalsäure, Tetrahydrophthalsäure, Hexahydrophthalsäure, Adipinsäure, Azelainsäure, Sebazinsäure, Fumarsäure, Maleinsäure, Glutarsäure, Bernsteinsäure oder Itaconsäure. Anstelle dieser Säuren können auch ihre Anhydride, soweit diese existieren, verwendet werden. Es ist auch möglich um verzweigte Polyester zu erhalten, Anteile an trifunktionellen Carbonsäuren zuzusetzen, wie Trimellithsäure, Apfelsäure, Aconitsäure, Bishydroxyethyltaurin, sowie Dimethylolpropionsäure.

Die Polyester besitzen vorzugsweise ein Molekulargewicht von 500 bis 6000, eine OH-Zahl von 20 bis 280 und eine Säurezahl von kleiner 3. Bevorzugt werden lineare Polyester eingesetzt.

Ferner lassen sich bei der Erfindung auch Polyesterpolyole, bevorzugt Diole, die sich von Lactonen ableiten, als Komponente a) benutzen. Diese Produkte erhält man beispielsweise durch die Umsetzung eines ε-Caprolactons mit einem Diol. Solche Produkte sind z.B. in der US-A-3 169 945 beschrieben.

Die Polylactonpolyole, die man durch diese Umsetzung erhält, zeichnen sich durch die Gegenwart einer endständigen Hydroxylgruppe und durch wiederkehrende Polyesteranteile, die sich von dem Lacton ableiten, aus. Diese wiederkehrenden Molekülanteile können der Formel 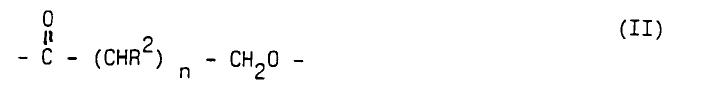 entsprechen, in der n bevorzugt 4 bis 6 ist und der Substituent R² Wasserstoff, ein Alkylrest, ein Cycloalkylrest oder ein Alkoxyrest ist, wobei kein Substituent mehr als 12 Kohlenstoffatome enthält und die gesamte Anzahl der Kohlenstoffatome in dem Substituenten in dem Lactonring 12 nicht übersteigt.

Das als Ausgangsmaterial verwendete Lacton kann ein beliebiges Lacton oder eine beliebige Kombination von Lactonen sein, wobei dieses Lacton mindestens 6 Kohlenstoffatome in dem Ring enthalten sollte, z.B. 6 bis 8 Kohlenstoffatome und wobei mindestens 2 Wasserstoffsubstituenten an dem Kohlenstoffatom vorhanden sein sollten, das an die Sauerstoffgruppe des Rings gebunden ist. Das als Ausgangsmaterial verwendete Lacton kann durch die folgende allgemeine Formel III dargestellt werden: 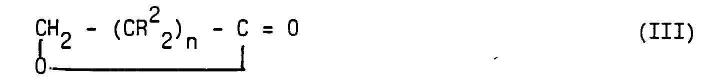 in der n und R² die bereits angegebene Bedeutung haben.

Die bei der Erfindung für die Herstellung der Polyesterdiole bevorzugten Lactone sind die epsilon-Caprolactone, bei denen n den Wert 4 hat. Das am meisten bevorzugte Lacton ist das unsubstituierte epsilon-Caprolacton, bei dem n den Wert 4 hat und alle R²-Substituenten Wasserstoff sind. Dieses Lacton wird besonders bevorzugt, da es in großen Mengen zur Verfügung steht und Überzüge mit ausgezeichneten Eigenschaften ergibt. Außerdem können verschiedene andere Lactone einzeln oder in Kombination benutzt werden.

Beispiele von für die Umsetzung mit dem Lacton geeigneten aliphatischen Diolen schließen Ethylenglykol, 1,3-Propandiol, 1,4-Butandiol, Dimethylolcyclohexan ein.

Als a) sind ebenfalls Polycarbonatdiole einsetzbar. Darunter sind Ester der Kohlensäure zu verstehen, die durch Reaktion von Kohlensäurederivaten, z.B. Diphenylcarbonat oder Phosgen, mit Diolen erhalten werden. Als derartige Diole kommen z.B. Ethylenglykol, Propandiol-1,2 und -1,3, Butandiol-1,4 und -1,3, Hexandiol-1,6, Octandiol-1,8, Neopentylglykol, 1,4-Bis-hydroxymethylcyclohexan, 2-Methyl-1,3-propandiol, 2,2,4-Trimethylpentandiol-1,3, Diethylenglykol, Polypropylenglykol, Dibutylenglykol, Polybutylenglykole, Bisphenol A, Tetrabrombisphenol in Frage.

Beispiele für geeignete Polycarbonatdiole sind z.B. in der EP-A-0 427 979 beschrieben worden. Es können auch sequenzierte Polydiole aus Polyethern und Polyestern oder Polycarbonaten verwendet werden.

Die Diole a) sind im wesentlichen frei von Carboxylgruppen, das heißt es sind nur geringe Anteile von nicht umgesetzten COOH-Gruppen vorhanden. Die Säurezahl liegt bevorzugt unter 10 mg KOH/g, im allgemeinen unter 5. Diese geringen Anteile an gegebenenfalls ionischen Gruppen ergeben keinen Beitrag zur Stabilisierung der wäßrigen Dispersionen.

Es können auch Mischungen verschiedener Diole a) eingesetzt werden.

Bei den gegebenenfalls mitverwendbaren niedermolekularen Verbindungen b) handelt es sich um niedermolekulare Alkohole. Es sind z.B. die aus der Polyurethanchemie an sich bekannten im Sinne einer Isocyanat-Additionsreaktion mindestens difunktionellen Hydroxylgruppen aufweisenden Verbindungen eines unter 400 liegenden Molekulargewichts. Als Verbindung kommen sowohl im Sinne der Isocyanat-Additionsreaktion difunktionelle Verbindungen als auch mindestens trifunktionelle Verbindungen bzw. beliebige Gemische derartiger Verbindungen in Betracht. Insbesondere ist es bevorzugt Diole bei der Umsetzung einzusetzen. Es können auch Verbindungen mit zwei mit Isocyanat reaktiven Gruppen und mindestens einer blockierten NCO-Gruppe in der Komponente Ab) enthalten sein.

Beispiele für solche Komponenten sind niedermolekulare mehrwertige Alkohole wie Ethylenglykol, Propandiol-1,2 und -1,3, Butandiol-1,4 und-1,3, Hexandiol-1,6, Octandiol-1,8, Neopentylglykol, 1,4-Bishydroxymethylcyclohexan, 2-Methyl-1,3-propandiol, 2,2,4-Trimethylpentandiol-1,3, Glycerin, Trimethylolpropan, Trimethylolethan, isomere Hexantriole oder Pentaerythrit oder Gemische davon. Solche Polyolverbindungen weisen insbesondere ein Molekulargewicht unter 400 auf.

Die Menge der niedermolekularen Verbindungen b) kann bis zu 30 Gew.-% bezogen auf a) betragen. Über die Menge von höherfunktionellen Polyolen kann der Verzweigungsgrad kontrolliert werden. Es ist jedoch darauf zu achten, daß keine Vernetzungen auftreten.

Erfindungsgemäß werden als Komponente B) NCO-terminierte Verbindungen eingesetzt, die durch Umsetzung von Verbindungen c) entstehen, die zwei mit Isocyanatgruppen reagierende Gruppen tragen und mindestens eine anionische oder zur Anionenbildung befähigte Gruppe tragen, mit aliphatischen, cycloaliphatischen oder aromatischen Diisocyanaten d). Es handelt sich im wesentlichen um niedermolekulare Verbindungen. Dabei beträgt das molare Verhältnis der nicht-ionischen reaktiven Gruppen zu den Isocyanatgruppen von 1 ;1,0 bis zu 1 : 4,0, beispielsweise von 1 : 1,5 bis zu 1 : 2,5. Bevorzugt beträgt das Verhältnis ungefähr 1 : 2. Es ist darauf zu achten, daß die reaktiven Gruppen mit den Isocyanaten umgesetzt werden. Diese Verbindungen sind dann auch in organischen Lösungsmitteln gut lösbar. Die Umsetzung erfolgt bevorzugt in flüssiger Form, das heißt es können gegebenenfalls Anteile organischer nicht reaktiver Lösungsmittel enthalten sein. Gegebenenfalls kann die Temperatur zur besseren Umsetzung etwas erhöht werden. Komponente B) kann als separate Komponente zugesetzt werden. Es ist jedoch auch möglich, B) in situ, in Gegenwart von A), aus der Mischung zu erzeugen und weiter umzusetzen. Ferner ist es auch möglich, die Komponenten A), Bc), Bd) und C) gleichzeitig miteinander umzusetzen.

Geeignete mit Isocyanatgruppen reagierende Gruppen sind insbesondere nichtionische Gruppen wie Hydroxylgruppen und Thiolgruppen. Als wenig reaktive saure zur Anionenbildung befähigte Gruppen kommen z.B. Carboxyl-, Phosphonsäure- und Sulfonsäuregruppen in Betracht. Als Verbindungen, die mindestens zwei mit Isocyanaten reagierende Gruppen und mindestens eine zur Anionenbildung befähigte Gruppe enthalten, sind z.B. Dihydroxysäuren geeignet. Dihydroxysäuren sind beispielsweise Dihydroxycarbonsäuren, wie Dihydroxypropionsäure, Dimethylolpropionsäure, Dimethylolessigsäure, Dimethylolbuttersäure, Dihydroxybernsteinsäure oder Dihydroxybenzoesäure geeignet. Geeignet sind auch die durch Oxidation von Monosacchariden zugänglichen Polyhydroxysäuren, z.B. Glukonsäure, Zuckersäure, Schleimsäure, Glucuronsäure und dergleichen. Phosphorsäuregruppenhaltige Verbindungen sind z.B. 2,2-Dimethylolpropanphosphonsäure oder Diethanolamidmethanphosphonsäure. Zur Herstellung eines anionischen Urethanprepolymers sind die Dihydroxycarbonsäuren bevorzugt, besonders bevorzugt wird die Verwendung von Dimethylolpropionsäure.

Als Komponente d) können zur Umsetzung beliebige organische Diisocyanate oder ihre Gemische eingesetzt werden. Es können z.B. aliphatische oder aromatische, auch sterisch gehinderte Isocyanate oder oligomerisierte Isocyanate eingesetzt werden. Beispiele von geeigneten Diisocyanaten sind Trimethylendiisocyanat, Tetramethylendiisocyanat, Pentamethylendiisocyanat, Hexamethylendiisocyanat, Propylendiisocyanat, Ethylendiisocyanat, 2,3-Dimethylenthylendiisocyanat, 1-Methyltrimethylendiisocyanat, 1,3-Cyclopentylendiisocyanat, 1,4-Cyclohexylendiisocyanat, 1,2-Cyclohexylendiisocyanat, 1,3-Phenylendiisocyanat, 1,4-Phenylendiisocyanat, 2,4-Toluylendiisocyanat, 2,6-Toluylen-diisocyanat, 1-Isocyanatomethyl-5-isocyanato-1,3,3-trimethylcyclohexan, Bis-(4-isocyanatocyclohexyl)methan, Bis-(4-isocyanato-phenyl)-methan, 4,4-Diisocyanato-diphenylether, 1,5-Dibutylpentamethylendiisocyanat, Tetramethylxylylendiisocyanat und 2,3-Bis-(8-isocyanato-octyl)-4-octyl-5-hexylcyclohexan.

Es wird soviel Umsetzungsprodukt B) zu der Mischung gegeben, daß das entstehende Polyesterurethan eine Säurezahl von 5 - 50 aufweist, bevorzugt zwischen 15 - 40. Phosphon- und Sulfonsäuren werden in entsprechenden Mengen eingesetzt.

Die Komponente B) wird hier beispielsweise in einer Menge von etwa 0,5 bis etwa 7 Gew.-%, vorzugsweise etwa 0,8 bis etwa 4,0 Gew.-% (berechnet als Carboxylgruppe), bezogen auf das herzustellende Urethanprepolymer, verwendet. Wenn die Carboxylgruppenmenge unter etwa 0,5 % liegt, ist es schwierig, eine stabile Emulsion herzustellen. Wenn dagegen die Menge 7 Gew.-% übersteigt, verstärkt sich die hydrophile Eigenschaft, was die Emulsion hochviskos macht und die Wasserbeständigkeit der Beschichtung verringert.

Die Stabilisierung der wäßrigen Dispersion erfolgt durch ionische Gruppen. Es können auch ionische und nicht-ionische Gruppen gemeinsam eingesetzt werden. Bevorzugt ist eine Stabilisierung allein durch anionische Gruppen.

Als Komponente C) können für die Herstellung der Polyurethandispersionen beliebige organische Diisocyanate gegebenenfalls auch als Gemische eingesetzt werden. Es handelt sich beispielsweise um die unter d) erwähnten Diisocyanate bzw. oligomere Isocyanate. Bevorzugt eingesetzt werden nicht vergilbende oder sterisch gehinderte Isocyanate mit 4 bis 25, vorzugsweise 6 - 16 C-Atomen, die in alpha-Stellung zur NCO-Gruppe eine oder zwei lineare, verzweigte oder cyclische Alkylgruppen mit 1 bis 12, bevorzugt 1 bis 4 C-Atomen enthalten. Das Grundgerüst kann z.B. aus einem aromatischen oder alicyclischen Ring oder aus einer aliphatischen linearen oder verzweigten C-Kette mit 1 bis 12 C-Atomen bestehen. Beispiele hierfür sind Isophorondiisocyanat, 4,4'-Diphenylpropan-diisocyanat, Xylylendiisocyanat, 1,1,6,6-Tetramethyl-hexamethylendiisocyanat, p- und m-Tetramethylxylylendiisocyanat und der entsprechenden hydrierten Homologen.

Ebenfalls ist es möglich, zur Umsetzung Polyisocyanate einzusetzen, bei denen der 2 übersteigende Teil an Isocyanatgruppen irreversibel defunktionalisiert worden ist. Als Verbindungen zur Defunktionalisierung kommen beispielsweise niedermolekulare, primäre oder sekundäre Amine oder Alkohole in Betracht.

Die Mengen an A), B) und C), bzw. an a), b), c) und d) werden so gewählt, daß bei der Umsetzung ein Umsetzungsprodukt mit endständigen OH-Gruppen entsteht, das heißt es wird mit einem Polyolüberschuß gearbeitet. Man kann mit einem OH zu NCO-Verhältnis von 1,01 bis 3 : 1 arbeiten, bevorzugt ist der Bereich 1,05 bis 2 : 1, besonders bevorzugt von 1,1 bis 1,5 : 1. Das Umsetzungsprodukt kann verzweigt aufgebaut sein, bevorzugt wird ein linearer Aufbau. Die Umsetzungsprodukte weisen ein Zahlenmittel der Molmasse (Mn) von 5000 - 50000, bevorzugt über 8000 und unter 30000 und eine OH-Zahl von 5 - 75, bevorzugt über 10 und unter 50 auf. Die Reaktion kann in der Mischung aller Komponenten erfolgen oder die Reaktion erfolgt stufenweise.

Die Reaktion kann lösemittelfrei erfolgen oder sie kann aber auch in dem Fachmann an sich geläufigen für die Polyurethansynthese geeigneten Lösemitteln durchgeführt werden. Die Lösemittel können im Ansatz verbleiben oder gegebenenfalls im Vakuum vor der weiteren Verarbeitung abdestilliert werden. Ebenso können weitere zusätzliche Lösemittel zugesetzt werden, um die Viskosität der Polymerlösung zu erniedrigen.

Als Lösemittel sind solche geeignet, die bei der Umsetzung der Isocyanate nicht stören. Es handelt sich beispielsweise um aromatische Kohlenwasserstoffe, wie Benzol, Toluol, Xylol, Ester, wie Ethylacett, Butylacetat, Methylglykolacetat, Ethylglykolacetat, Methoxypropylacetat, Ether, wie Tetrahydrofuran, Dioxan, vollveretherte Mono- oder Diglykole von Ethylenglykol oder Propylenglykol, wie Diethylenglykol oder Dipropylenglykoldimethylether, Ketone wie Aceton, Methylethylketon, halogenhaltige Lösemittel wie Methylenchlorid oder Trichlormonofluorethan. Bevorzugt werden Lösemittel, die eine Dispergierung in der Wasserphase erleichtern. Ebenfalls bevorzugt werden Lösemittel, die später in den erfindungsgemäßen Überzugsmitteln keine negativen Eigenschaften aufweisen.

Das OH-funktionalisierte Polyurethan-Prepolymere wird als Zwischenprodukt durch Umsetzung mit weiteren Polyisocyanaten D) kettenverlängert. Diese werden beispielsweise homogen mit dem funktionalisierten Zwischenprodukt gemischt und dann gegebenenfalls durch Erwärmen oder mit in der NCO-Chemie üblichen Katalysatoren, z.B. Dibutylzinndilaurat (DBTL), Aminderivate, unterstützt, zur Reaktion gebracht werden. Das kann vor oder nach der Salzbildung der in anionische Gruppen überführbaren Gruppen in der organischen oder wäßrigen Phase geschehen, bevorzugt findet die Reaktion nach Neutralisation in der organischen Phase statt.

Als Polyisocyanate sind beispielsweise lackübliche bekannte Poly- oder Diisocyanate geeignet, wie sie auch vorstehend für die Komponenten d) und c) beschrieben worden sind. Sie können auf aliphatischer, cycloaliphatischer oder aromatischer Basis sein. Sie weisen bevorzugt eine Molmasse von unter 1200 auf.

Als Polyisocyanaten E) sind ebenfalls niedermolekulare NCO-terminierte Prepolymere geeignet. Diese sind bevorzugt difunktionell. Ihr Molekulargewicht liegt bevorzugt unter 1000.

Vor oder nach der Kettenverlängerung werden die in anionischen Gruppen überführbare Gruppen neutralisiert. Hierzu werden Basen eingesetzt, z.B. Ammoniak oder Amine. Geeignete Amine sind primäre, sekundäre oder tertiäre Amine, z.B. Trialkylamine, wie Trimethylamin, Triethylamin, Triisopropylamin, Tri-n-propylamin und Tri-n-butylamin; N-Alkylmorpholine, wie N-Methylmorpholin und N-Ethylmorpholin; N-Dialkylalkanolamine, wie N-Dimethylethanolamin und N-Diethylethanolamin; Dialkylamin wie Diethylamin, Dibutylamin, Diisopropylamin; Alkylamine wie Octylamin, Hexylamin, Isopropylamin, Aminoethanol; Mischungen aus mindestens zwei dieser Verbindungen. Es werden im allgemeinen zwischen 30 % und 100 % der sauren Gruppen in Salzgruppen überführt.

Das Herstellen der wäßrigen Dispersion kann nach bekannten Verfahren erfolgen. Beispielsweise ist es möglich, die neutralisierten Harze vorzulegen und unter gutem Dispergieren mit Wasser zu versetzen. Ebenso kann die gegebenenfalls Neutralisationsmittel enthaltende Wasserphase vorgelegt werden und unter Rühren wird das Bindemittel eingearbeitet. Ebenso ist eine kontinuierliche Arbeitsweise möglich, das heißt es werden in bekannten Aggregaten, z.B. einem Rotor-Statormischer, gleichzeitig Harz, Wasser und Neutralisationsmittel homogen zusammengemischt. Die Überführung in die Wasserphase kann durch erhöhte Temperatur unterstützt werden.

Der pH-Wert der resultierenden Polyurethandispersion wird kontrolliert und gegebenenfalls beispielsweise auf einen Wert zwischen 6 und 8 eingestellt. Es entsteht aus den Komponenten eine feinteilige wäßrige urethandispersion.

Die erfindungsgemäße Polyurethandispersion weist eine Säurezahl von 5 bis 50 (bezogen auf den Festkörper), bevorzugt 15 bis 35, auf. Der Festkörper beträgt beispielsweise 25 bis 55 Gew.-%. Das Mn der Bindemittel beträgt 10000 bis 300000, insbesondere 50000 bis 200000. Sie können gegebenenfalls noch weitere funktionelle Gruppen, wie z.B. OH-Gruppen, aufweisen. Die entstehenden Dispersionen haben beispielsweise eine mittlere Teilchengröße zwischen 10 - 1000 nm, bevorzugt 30 - 500.

Die erfindungsgemäßen Polyurethan-Dispersionen sind lagerstabil und zeigen keine Hydrolyseerscheinungen. Auch nach der Applikation und Vernetzung zeichnen sie sich durch eine hohe Stabilität gegen Wasser aus. Daraus hergestellte Bindemittelfilme weisen nur geringe hydrophile Eigenschaften auf. Sie ergeben durch die Reaktionsführung nur geringe Anteile an Nebenreaktionen.

Aus den erfindungsgemäßen Polyurethan-Dispersionen können wäßrige, lösungsmittelarme Basislacküberzugsmittel hergestellt werden. Dazu werden der Dispersion Pigmente, Additive, sowie gegebenenfalls weitere Bindemittel und gegebenenfalls geringe Mengen an Lösungsmittel zugesetzt.

Die im Überzugsmittel vorhandenen zusätzlichen weiteren Bindemittelkomponenten können wasserverdünnbare Polyesterharze und/oder wasserverdünnbare Polyacrylharze und/oder acrylierte Polyesterharze, sowie weitere andersartige reaktive oder nicht funktionelle Polyurethan-Dispersionen, zusammen mit gegebenenfalls Melaminharzen und/oder blockierte Polyisocyanaten als Vernetzer sein. Der Gesamtanteil der zusätzlichen Bindemittel kann z.B. 30 bis 90 Gew.-%, bevorzugt 30 bis 80 Gew.-% betragen, bezogen auf den Festkörpergehalt der gesamten Bindemittelmischung, dabei kann der Vernetzer bis zu 20 Gew.-% betragen.

Wasserverdünnbare Polyester sind beispielsweise solche mit freien Carboxylgruppen, das heißt Polyester mit hoher Säurezahl. Es handelt sich um die üblichen bekannten Polyester auf Basis von Polyolen und Polycarbonsäuren, die noch freie Carboxylgruppen enthalten. Diese entstehen entweder durch abbrechen der Veresterungsreaktion oder durch Einreagieren von Hydroxycarbonsäuren oder durch Bildung partieller Ester von Polycarbonsäuren.

Die wasserverdünnbaren Polyacrylatharze können ebenso wie die oben beschriebenen Polyesterharze freie Carboxylgruppen enthalten. Es handelt sich in der Regel um hydroxylhaltige Acryl- bzw. Methacrylcopolymerisate, deren Carboxylgruppen aus den Anteilen an Acryl- oder Methacrylsäure stammen.

Unter zusätzlichen Polyurethandispersionen sind beispielsweise solche zu verstehen, die in der DE-A-36 28 125 beschrieben werden. Es sind anionisch stabilisierte Polyurethan-Dispersionen, die durch Umsetzung von Polyolen, Diisocyanaten, ionischen Verbindungen, sowie Kettenverlängerung mit Aminen entstehen. Weiterhin können auch durch hydrophile Gruppen stabilisierte Polyurethan-Dispersionen den erfindungsgemäßen Überzugsmitteln zugesetzt werden.

Eine weitere Gruppe von verwendbaren wäßrigen Dispersionen sind die in der DE-A-36 28 124 beschriebenen Dispersionen auf Basis von ionischen epoxidgruppenhaltigen Polykondensaten, die mit copolymerisierbaren ungesättigten Monomeren umgesetzt werden.

Brauchbare acrylierte Polyester werden beispielsweise in den DE-A-29 11 913 oder DE-A-35 44 337 beschrieben. Es handelt sich um Reaktionsprodukte von radikalisch polymerisierten alpha,beta-ungesättigten Monomeren in Gegenwart von linearen oder verzweigten carboxylfunktionellen Polyestern, die gegebenenfalls noch Urethan, Amid, Hydroxyl oder Epoxidgruppen enthalten.

Zu als Vernetzer geeigneten Aminharzen zählen beispielsweise alkylierte Kondensate, die durch Umsetzung von Aminotriazinen und Amidotriazinen mit Aldehyden hergestellt werden. Nach bekannten technischen Verfahren werden Amine oder Aminogruppen tragende Verbindungen wie Melamin, Guanamin, Acetoguanamin, Benzoguanamin, Dicyandiamid oder Harnstoff in Gegenwart von Alkoholen, wie Methanol, Ethanol, Propanol, Butanol oder Hexanol mit Aldehyden, insbesondere Formaldehyd, kondensiert. Beispiele für derartige Harze und ihre Herstellung werden in "Houben-Weyl, Methoden der organischen Chemie", 1963, Seite 357, beschrieben. Diese Produkte sind im Handel geläufig.

Als Vernetzungsmittel können auch wasserdispergierbare blockierte Polyisocyanate eingesetzt werden. Es können bei der Erfindung beliebige Polyisocyanate benutzt werden, bei denen die Isocyanatgruppen mit einer isocyanatreaktiven, flüchtigen, monofunktionellen Verbindung eingesetzt worden sind. Bei der Herstellung der blockierten Polyisocyanate können beliebige für die Vernetzung geeignete organische Polyisocyanate verwendet werden. Bevorzugt sind die Isocyanate, die 3 bis 36, insbesondere 8 bis 15 Kohlenstoffatome enthalten. Beispiele von geeigneten Diisocyanaten sind die oben genannten Diisocyanate C).

Es können auch Polyisocyanate von höherer Isocyanatfunktionalität verwendet werden. Beispiele dafür sind Tris-(4-isocyanatophenyl)-methan, 1,3,5-Triisocyanatobenzol, 2,4,6-Triisocyanatotoluol, 1,3,5-Tris-(6-isocyanatohexyl)-biuret, Bis-(2,5-diisocyanato-4-methyl-phenyl)-methan und polymere Polyisocyanate, wie Dimere und Trimere von Diisocyanatotoluol. Ferner kann man auch Mischungen von Polyisocyanaten benutzen.

Die bei den erfindungsgemäßen Überzugsmitteln als Vernetzungsmittel in Betracht kommenden organischen Polyisocyanate können auch Prepolymere sein, die sich beispielsweise von einem Polyol einschließlich eines Polyetherpolyols oder eines Polyesterpolyols ableiten. Dazu werden Polyole mit einem Überschuß von Polyisocyanaten umgesetzt, wodurch Prepolymere mit endständigen Isocyanatgruppen entstehen.

Für die Blockierung der Polyisocyanate können beliebige übliche abspaltbare Blockierungsmittel, wie aliphatische, cycloaliphatische oder aromatische Akylmonoalkohole oder Oxime, wie Methylethylketonoxim, Acetonoxim und Cyclohexanonoxim, sowie auch Caprolactame, Malonester, Acetessigester, Phenole, Hydroxamsäureester und Pyrazole verwendet werden. Bevorzugte Blockierungsmittel sind Glykole, Oxime, Lactame oder ihre Mischungen. Ein Teil Blockierungsmittel kann zur Verbesserung der Emulgierung aus Polyalkylenmonoethern, insbesondere Polyethylenmonoalkylethern bestehen.

Weiterhin kann das Überzugsmittel lacktechnische Additive enthalten, beispielsweise rheologierbeeinflussende Mittel, wie hochdisperse Kieselsäure, Schichtsilikate oder polymere Harnstoffverbindungen. Als Verdicker wirken auch beispielsweise wasserlösliche Celluloseether, sowie synthetische Polymere mit ionischen und/oder assoziativ wirkenden Gruppen wie Polyvinylalkohol, Poly(meth)acrylamid oder Polyvinylpyrrolidon oder auch hydrophob modifizierte ethoxylierte Urethane oder Polyacrylate. Daneben können auch Antiabsetzmittel, Verlaufsmittel, Lichtschutzmittel, Antischaummittel, wie beispielsweise silikonhaltige Verbindungen; Netzmittel, sowie haftvermittelnde Substanzen eingesetzt werden. Unter Netzmittel werden auch bekannte Pastenharze verstanden, wie sie z.B. in der DE-A-40 00 889 beschrieben sind, die zum besseren Dispergieren und Vermahlen der Pigmente eingesetzt werden können. Zum Beschleunigen der Härtung können Katalysatoren eingesetzt werden, es ist jedoch auch möglich durch thermische Energie ohne Einsatz eines Katalysators zu härten.

Als in geringen Mengen vorhandene Lösemittel sind übliche lacktechnische Lösemittel geeignet, diese können von der Herstellung der Bindemittel stammen oder sie werden separat zugegeben. Beispiele für solche Lösemittel sind ein- oder mehrwertige Alkohole, z.B. Propanol, Butanol, Hexanol; Glykolether oder -ester, z.B. Diethylenglykoldimethylether, Ethoxypropanol, Butylglykol; Glykole z.B. Ethylenglykol; N-Methylpyrrolidon, sowie Ketone wie Methylethylketon, Aceton, Cyclohexanon; aromatische oder aliphatische Kohlenwasserstoffe, z.B. Toluol, Xylol oder C6 - C12 lineare oder verzweigte aliphatische Kohlenwasserstoffe.

Als Pigmente werden übliche anorganische und/oder organische Buntpigmente und/oder Effektpigmente wie z.B. Metallic- oder Perlglanzpigmente verwendet. Die Menge beträgt zwischen 0,5 bis 15 Gew.-% bezogen auf das Überzugsmittel. Die Metallpulver können auch zusammen mit einem oder mehreren weiteren nicht Metallic-Pigmenten oder Farbstoffen, z.B. Mikrotitandioxid, eingesetzt werden.

Als weitere Pigmente können bekannte organische oder anorganische Farbpigmente eingesetzt werden. Beispiele für Buntpigmente sind Küpenfarbstoffe, Chinacridone, Perylene und Phthalocyanine. Beispiele für anorganische Pigmente sind Ruß, Titandioxid oder Eisenoxidpigmente, transparente Pigmente, z.B. mikronisiertes Titandioxid, mikronisiertes Bariumsulfat oder Siliciumdioxid. Gegebenenfalls können auch Füllstoffe wie Koalin, Glimmer, Kreide, Bariumsulfat, Kieselsäuren oder Quarzmehl zugesetzt werden. Mit diesen Farbpigmenten werden bevorzugt Uni-Basislacke hergestellt.

Die Methoden zur Herstellung des erfindungsgemäßen Überzugsmittels sind bekannt. Beispielsweise können die Pigmente und/oder Füllstoffe in einem Teil der Bindemitteldispersion oder der Netzmittel dispergiert und vermahlen werden. Nach dem Vermahlen können die weiteren Lackbestandteile, beispielsweise weitere Polyurethan-Dispersionen, zusätzlich Bindemittel, Vernetzer, rheologiebeeinflussende Mittel, Entschäumer, Antikratermittel, Verlaufsmittel, Katalysatoren oder Lösungsmittel, zugesetzt werden. Gegebenenfalls werden der Festkörper und der pH-Wert des Überzugsmittels eingestellt.

Aus den Bindemitteln können wäßrige Überzugsmittel, beispielsweise für Metallic-Basislacke, Füller, Steinschlagschutzschichten oder uni-Decklacke hergestellt werden. Dabei werden die Pigmente, Additive und weiteren Bindemittel dem Verwendungszweck angepaßt. Besonders geeignet sind die Bindemittel für die Herstellung von wäßrigen Basislacken.

Die aus den erfindungsgemäßen Polyurethandispersionen hergestellten Überzugsmittel können physikalisch trocknend, z.B. in Basislacken, chemisch vernetzend als 1-Komponenten-Material, z.B. in Grundierungen, sein. Dabei werden die Überzugsmittel nach bekannten Methoden appliziert, z.B. durch Spritzen, und danach werden die Filme getrocknet bzw. vernetzt. Das kann gegebenenfalls durch erhöhte Temperaturen bis zu 150°C unterstützt werden.

Es können Einschichtlackierungen oder Mehrschichtlackierungen hergestellt werden. Dabei ist es bevorzugt, daß bei einer Verwendung als Wasserbasislack mit wäßrigen Klarlacken oder Pulverklarlacken beschichtet wird.

Als Substrate sind Metall- und Kunststoffsubstrate geeignet. Besonders sind die in der Automobilindustrie bekannten Substrate geeignet, z.B. Eisen, Aluminium, Magnesium oder Legierungen davon, sowie Polyurethane, Polycarbonate oder Polyolefine. Diese können gegebenenfalls mit Grundierungen und/oder anderen Überzugsmittelschichten beschichtet sein.

Beispielsweise ist es möglich, daß auf ein Substrat eine Grundierungsschicht sowie gegebenenfalls weitere Schichten aufgebracht und anschließend eine Decklackschicht mit einem wäßrigen Überzugsmittel gemäß der Erfindung aufgebracht werden.

Im folgenden wird die Erfindung an Hand von Ausführungsbeispielen näher erläutert.

### Beispiel 1:

582 g eines handelsüblichen Polyesters (Mₙ =1000, OH-Zahl = 106), 28,7 g Dimethylolpropionsäure (DMPA) und 124 g N-Methylpyrrolidon (NMP) werden gemischt und bei 80°C gelöst. Danach wird auf 50°C abgekühlt. Zu der Mischung werden 139 g Isophorondiisocyanat (IPDI) gegeben, auf 80°C aufgeheizt und 125 g NMP zugegeben. Die Mischung wird bis zum NCO-Wert < 0,1 % umgesetzt.

Zu dem Umsetzungsprodukt werden 33,2 g Dimethylisopropanolaminlösung (50 %ig in Wasser) bei 80°C zugegeben und 10 Minuten untergerührt. Es werden 1174 g vollentsalztes Wasser bei 80°C langsam zugegeben und gut untergemischt. Dabei kann die Temperatur auf 50°C abkühlen. Zu der erhaltenen wäßrigen Dispersion werden 34,5 g IPDI bei 50°C innerhalb 10 Minuten zugemischt und danach auf 80°C erwärmt.

Es entsteht eine feinteilige wäßrige lagerstabile Dispersion.

| | |
|---|---|
| FK | 36,7 % (bestimmt bei 30 min. 150°C Umluftofen) |
| SZ | 17,4 mg KOH/g (Festkörper) |
| MEQ-Amin | 18,4 (Milliäquivalente pro 100 g Festkörper) |
| FK = Festkörpergewicht; SZ = Säurezahl; MEQ = Milliäquivalent. | |

### Beispiel 2:

582 g eines handelsüblichen Polyesters (Mₙ = 1000, OH-Zahl = 106), 28,7 g Dimethylolpropionsäure und 124 g NMP werden gemischt und bei 80°C gelöst. Danach wird auf 50°C abgekühlt. Zu der Mischung werden 139 g IPDI gegeben, auf 80°C aufgeheizt und 125 g NMP zugegeben. Die Mischung wird bis zum NCO-Wert < 0,1 % umgesetzt.

Zu dem Umsetzungsprodukt werden 34,5 g IPDI bei 50°C zugegeben und bis zum NCO-Wert < 0,1 % bei 80°C umgesetzt. Dazu werden 33,2 g Dimethylisopropanolaminlösung (50 %) zugegeben und untergemischt. Danach wird mit 1174 g vollentsalztem Wasser bei 80°C unter gutem Rühren langsam versetzt. Es wird 3 Stunden homogenisiert.

| | |
|---|---|
| FK | 36,3 % |
| SZ | 16,7 mg KOH/g |
| MEQ-Amin | 19,0 |

### Beispiel 3:

219 g eines handelsüblichen Polyesters (Mₙ = 1955 OH-Zahl = 57,4), sowie 282 g eines Polyesters (Mₙ = 5000 OH-Zahl = 22,4), 22,4 g DMPA, sowie 195 g NMP werden gemischt und bei 80°C aufgeschmolzen und zu einer homogenen Lösung verrührt. Nach dem Abkühlen auf 50°C werden 59,6 g IPDI zugegeben und bei 80°C bis zum NCO-Wert < 0,1 umgesetzt. Nach dem Abkühlen auf 50°C werden 0,6 g Dibutylzinndilaurat (DBTL), sowie 14,9 g IPDI zugegeben und bei 80°C umgesetzt zu einem NCO-Wert < 0,1 %.

Es werden bei dieser Temperatur 25,5 g Dimethylisopropanolaminlösung (50 %) zugegeben und 10 Minuten homogen gerührt. Danach wird mit 915 g vollentsalztem Wasser bei 80°C unter gutem Rühren verdünnt.

Es entsteht eine homogene stabile Dispersion.

| | |
|---|---|
| FK | 35,8 % |
| SZ | 18,2 mg KOH/g FK |
| MEQ-Amin | 19,7 |

### Beispiel 4:

Es werden 582 g eines handelsüblichen Polyesters nach Beispiel 1, 28,7 g DMPA, sowie 125 g Aceton gemischt und bei 55°C gelöst. Dazu werden 139 g IPDI gelöst und 125 g Aceton bei 55°C zugegeben und bei 65°C bis zu einem NCO-Wert < 0,1 % umgesetzt. Zu dieser Mischung werden bei 50°C 0,8 g DBTL, sowie 38 g IPDI zugegeben und erneut bei 65°C umgesetzt bis zu einem NCO-Wert < 0,1 %.

Nach dem Abkühlen auf 50°C werden 35,5 g einer wäßrigen Lösung von Dimethylisopropanolamin (50 %) zugegeben und danach mit 1426 g vollentsalztem Wasser bei 50°C 10 Minuten unter gutem Rühren zugemischt. Danach wird bei 90°C das Aceton abdestilliert. Es kann dabei gegebenenfalls ein leichtes Vakuum angelegt werden.

| | |
|---|---|
| FK | 37,4 % |
| SZ | 17,1 mg KOH/g |
| MEQ-Amin | 19,2 |

### Beispiel 5:

Es werden 1863 g eines handelsüblichen Polyesters nach Beispiel 1, 91,8 g DMPA, sowie 400 g Aceton gemischt und bei 65°C gelöst. Dazu werden 444 g IPDI gelöst und 400 g Aceton bei 50°C zugegeen und bei 65°C bis zu einem NCO-Wert < 0,1 % umgesetzt. Zu dieser Mischung werden bei 50°C 2,5 g DBTL, sowie 110 g IPDI zugegeben und erneut bei 65°C umgesetzt bis zu einem NCO-Wert < 0,1 %.

Nach dem Abkühlen auf 50°C werden 142 g einer wäßrigen Lösung von Dimethylisopropanolamin (50 %) zugegeben und danach mit 4520 g vollentsalztem Wasser bei 50°C 10 Minuten unter gutem Rühren zugemischt. Danach wird bei 90°C das Aceton abdestilliert. Es kann dabei gegebenenfalls ein leichtes Vakuum angelegt werden.

| | |
|---|---|
| FK | 31,9 % |
| SZ | 17,5 mg KOH/g |
| MEQ-Amin | 25,3 |

### Beispiel 6:

1267 g eines handelsüblichen Polyesters (Mₙ = 1955, OH-Zahl = 57,4) und 1632 g Polyester (Mₙ = 5000, OH-Zahl = 22,4), 130 g DMPA und 1125 g NMP werden gemischt und bei 65°C gelöst. Danach wird auf 50°C abgekühlt. Zu der Mischung werden 345 g IPDI gegeben, auf 65°C aufgeheizt und bis zum NCO-Wert < 0,1 % umgesetzt.

Zu dem Umsetzungsprodukt werden 86 g IPDI vermischt mit 3,5 g Dibutylzinndilaurat (DBTL) bei 50°C zugegeben und bis zum NCO-Wert < 0,1 % bei 65°C umgesetzt. Dazu werden 180 g Dimethylisopropanolaminlösung (50 %) zugegeben und untergemischt. Dann wird mit 6495 g vollentsalztem Wasser bei 80°C unter gutem Rühren langsam versetzt. Es wird 3 Stunden homogenisiert.

| | |
|---|---|
| FK | 35,2 % |
| SZ | 18,8 mg KOH/g |
| MEQ-Amin | 25,1 |

### Beispiel 7:

Es werden 485 g eines handelsüblichen Polyesters aus Beispiel 1, 25 g DMPA, 2,1 g Trimethylolpropan, sowie 105 g NMP gemischt und bei 80°C gelöst. Bei 50°C werden 118 g IPDI gemischt mit 65 g NMP zugegeben und bei 80°C bis zu einem NCO-Wert < 0,1 umgesetzt.

Es werden 400 g Aceton vermischt mit 117 g eines trifunktionellen Isophoronisocyanurats umgesetzt mit 33 Mol.-% Caprolactam und bei 80°C bis zu einem NCO-Wert ca. 0,2 % umgesetzt. Nach Abkühlen auf 50°C werden 30,5 g Dimethylisopropanolaminlösung zugesetzt und bei der gleichen Temperatur 1470 g vollentsalztes Wasser in 10 Minuten unter gutem Rühren zugefügt. Bei 90°C wird das Aceton abdestilliert, gegebenenfalls unter Anlegen von Vakuum.

| | |
|---|---|
| FK | 35,6 % |
| SZ | 17,7 mg KOH/g |
| MEQ-Amin | 19,7 |

### Beispiel 8:

Es werden 415 g eines handelsüblichen Polyesters aus Beispeil 1, 24 g DMPA, 1,8 g Trimethylolpropan, sowie 93 g NMP, sowie 43,5 g eines Urethandiols, hergestellt aus 1 mol Trimethylolpropan und einem 1 mol eines halbseitig Caprolactam verkappten IPDI, gemischt und bei 80°C gelöst. Bei 50°C werden 93,5 g IPDI gemischt mit 89 g NMP zugegeben, sowie 106 g trifunktionellen Isophoronisocyanurats umgesetzt mit 33 Mol.-% Caprolactam und bei 80°C bis zu einem NCO-Wert < 0,1 % umgesetzt und dann auf 50°C gekühlt.

Es werden nacheinander 433 g Aceton, 29 g IPDI und 0,6 g DBTL zugegeben und bei 70°C bis zu einem NCO-Wert ca. 0,2 % umgesetzt.

Nach Abkühlen auf 50°C werden 29,5 g Dimethylisopropanolaminlösung (50 %) zugesetzt und bei der gleichen Temperatur 960 g vollentsalztes Wasser in 10 Minuten unter gutem Rühren zugefügt. Bei 90°C wird das Aceton abdestilliert, gegebenenfalls unter Anlegen von Vakuum.

| | |
|---|---|
| FK | 40,7 % |
| SZ | 16,7 mg KOH/g |
| MEQ-Amin | 21 |

### Beispiel 9:

464 g eines handelsüblichen Polyesters aus Beispiel 1, 25,4 g DMPA und 111 g NMP, 59 g Urethandiol, werden gemischt und bei 80°C gelöst. Danach wird auf 50°C abgekühlt. Zu der Mischung werden 129 g Isophorondiisocyanat gegeben, auf 80°C aufgeheizt und 111 g NMP zugegeben. Die Mischung wird bis zum NCO-Wert ca. 0,2 umgesetzt.

Zu dem Umsetzungsprodukt werden 32,5 g IPDI und 0,7 g DBTL, bei 50°C zugegeben und bis zum NCO-Wert < 0,1 % bei 80°C umgesetzt. Dazu werden 27 g Dimethylisopropanolaminlösung (50 %) zugegeben und untergemischt. Dann wird mit 1020 g vollentsalztem Wasser bei 80°C unter gutem Rühren langsam versetzt. Es wird 3 Stunden homogenisiert.

| | |
|---|---|
| FK | 35,3 % |
| SZ | 17,7 mg KOH/g |
| MEQ-Amin | 22 |

### Beispiel 10:

246 g Methylethylketon, 49 g DMPA und 131 g IPDI werden gemischt und bei 60°C zu einem NCO-Wert von 4,4 % umgesetzt. Bei 50°C werden 475 g Polyester (hochmol.) und 608 g Polyester (niedermol.) nach Beispiel 6 und 361 g MEK zugegeben. Bei 60°C wird zu einem NCO-Wert < 0,1 % umgesetzt, wieder auf 50°C gekühlt und dann 33 g IPDI mit 1,3 g DBTL zugesetzt. Aufheizen auf 60°C, reagieren bis zu NCO < 0,1 % und dann bei 50°C zugeben von 57 g Dimethylisopropanolamin (50 %). Es wird 10 Minuten homogenisiert und dann mit 2329 g Wasser versetzt und später bei ca. 85°C unter Vakuum das MEK abdestilliert.

| | |
|---|---|
| FK | 38,6 % |
| SZ | 17,7 mg KOH/g |
| MEQ-Amin | 19,7 |

### Beispiel 11

Die Bestandteile zur Herstellung eines Preadduktes aus 244 g n-Methylpyrrolidon, 1074 g Methylethylketon, 186 g DMPA und 888 g IPDI werden gemischt und bei 60 °C zu einem NCO-Wert von 4,4 % umgesetzt. Bei 50 °C werden 3815 g eines handelsüblichen Polyesters nach Beispiel 1 und 1021 g Methylethylketon zugegeben. Bei 60 °C wird bis zu einem NCO-Wert kleiner 0,1 % umgesetzt, wieder auf 50 °C gekühlt und dann 222 g IPDI mit 5 g DBTL zugesetzt. Nach dem Aufheizen auf 60 °C und dem Reagierenlassen bis zu einem NCO-Wert kleiner 0,1 % werden bei 50 °C 215 Dimethylisopropanolamin (50 %ig) zugegeben. Es wird 10 min. lang homogenisiert und dann mit 8622 g vollentsalztem Wasser versetzt und später bei ca. 85 °C unter Vacuum das Methylethylketon abdestilliert.

| | |
|---|---|
| FK = | 36,8 % |
| SZ = | 17,6 mg KOH/g |
| MEQ-Amin = | 20,0 |

### Beispiel 12

127 g Methylethylketon, 26 g DMPA und 101 g IPDI werden gemischt und bei 60 °C zu einem NCO-Wert von 8,7 % umgesetzt. Bei 50 °C werden 647 g eines handelsüblichen Polyesters (Mn = 1730, OH-Zahl = 65) und 131 g Methylethylketon zugegeben. Bei 60 °C wird bis zu einem NCO-Wert kleiner 0,1 % umgesetzt, wieder auf 50 °C gekühlt und dann 20 g IPDI, 10 g IPDI-Triisocyanurat mit 0,8 g DBTL umgesetzt. Es wird aufgeheizt auf 60 °C, reagiert bis zu einem NCO-Wert kleiner 0,1 % und dann bei 50 °C 30 g wäßrige Dimethylisopropanolaminlösung (50 %ig) zugesetzt. Nach dem Homogenrühren (10 min.) wird mit 1407 g vollentsalztem Wasser bei 50 °C 10 min. unter gutem Rühren verdünnt. Danach wird bei 90 °C das Methylethylketon abdestilliert. Es kann dabei ggf. ein leichtes Vakuum angelegt werden.

| | |
|---|---|
| FK = | 35,6 % |
| SZ = | 14,6 mg KOH/g |
| MEQ-Amin = | 18,7 |

## Patentansprüche

1. Wäßrige Dispersion harnstoffgruppenfreier, ionische Gruppen enthaltender Polyurethanharze mit einem Zahlenmittel der Molmasse (Mn) von 10000 bis 300000 und einer Säurezahl von 5 bis 50, erhältlich durch Bereitung eines OH-Gruppen enthaltenden Polyurethan-Prepolymeren mit einer OH-Zahl von 5 bis 75 und einem Zahlenmittel der Molmasse (Mn) von 5000 bis 50000, durch Umsetzung in organischem Medium von
A) einer oder mehreren mit Isocyanat reaktiven Verbindungen mit einer Säurezahl von 0 bis 10, in der Form von
a) 70 bis 100 Gew.-% eines oder mehrerer Polyesterdiale, Polyetherdiole und/oder Polycarbonatdiole mit einem Molekulargewicht von 500 bis 6000, zusammen mit
b) 30 bis 0 Gew.-% einer oder mehrerer von a) unterschiedlicher Verbindungen mit mindestens zwei mit Isocyanat reaktiven Gruppen, mit einem Molekulargewicht von 40 bis 800, mit
B) einem oder mehreren, freie Isocyanatgruppen enthaltenden Reaktionsprodukten aus
c) mindestens einer Verbindung mit zwei mit Isocyanat reaktiven Gruppen und mindestens einer anionischen oder zur Anionenbildung befähigten Gruppe und
d) einem oder mehreren organischen Diisocyanaten
in einem derartigen Mengenverhältnis, daß das molare Verhältnis der mit Isocyanat reaktiven Gruppen von c) zu den Isocyanatgruppen von d) 1 : 1,0 bis 1 : 4,0 beträgt, wobei das Reaktionsprodukt B) in Anwesenheit der Komponente A) hergestellt werden kann,
wobei die Komponente B) in einer derartigen Menge eingesetzt wird, daß die fertigen Polyurethanharze die gewünschte Säurezahl aufweisen,
und mit
C) einem oder mehreren Polyisocyanaten mit mindestens zwei freien Isocyanatgruppen pro Molekül, in einer derartigen Menge, daß das molare Verhältnis der OH-Gruppen der Komponente A) zu den NCO-Gruppen der Komponenten B) und C) 1,01 : 1 bis 3 : 1 beträgt,
wobei die Komponenten A), Bc), Bd) und C) gleichzeitig miteinander umgesetzt werden können,
worauf das aus A), B) und C) erhaltene Prepolymere vor oder nach der teilweisen oder vollständigen Neutralisation vorhandener in ionische Gruppen überführbarer Gruppen in dem organischen Medium oder nach Überführung in die Wasserphase einer Kettenverlängerung unterzogen wird durch Umsetzung mit
D) einem oder mehreren polyfunktionellen Isocyanaten mit einer Funktionalität an freien NCO-Gruppen von mindestens 1,8, in derartigen Anteilen, daß die fertigen Polyurethanharze das gewünschte Zahlenmittel der Molmasse aufweisen.

2. Verfahren zur Herstellung wäßriger Dispersionen von harnstoffgruppenfreien, ionische Gruppen enthaltenden Polyurethanharzen, dadurch gekennzeichnet, daß man ein OH-Gruppen enthaltendes Polyurethanprepolymeres mit einer OH-Zahl von 5 bis 75 und einem Zahlenmittel der Molmasse (Mn) von 5000 bis 50000 herstellt durch Umsetzung in organischem Medium von
A) einer oder mehreren mit Isocyanat reaktiven Verbindungen mit einer Säurezahl von 0 bis 10, in der Form von
a) 70 bis 100 Gew.-% eines oder mehrerer Polyesterdiole und/oder Polyetherdiole mit einem Molekulargewicht von 500 bis 6000, zusammen mit
b) 30 bis 0 Gew.-% einer oder mehrerer von a) unterschiedlicher Verbindungen mit mindestens zwei mit Isocyanat reaktiven Gruppen, mit einem Molekulargewicht von 40 bis 800, mit
B) einem oder mehreren, freie Isocyanatgruppen enthaltenden Reaktionsprodukten aus
c) mindestens einer Verbindung mit 2 mit Isocyanat reaktiven Gruppen und mindestens einer anionischen oder zur Anionenbildung befähigten Gruppe und
d) einem oder mehreren organischen Diisocyanaten, in einem derartigen Mengenverhältnis, daß das molare Verhältnis der mit Isocyanat reaktiven Gruppen von c) zu den Isocyanatgruppen von d) 1 : 1,0 bis 1 : 4,0 beträgt, wobei das Reaktionsprodukt B) in Anwesenheit der Komponente A) hergestellt werden kann,
wobei die Komponente B) in einer derartigen Menge eingesetzt wird, daß die fertigen Polyurethanharze eine Säurezahl von 5 bis 50 aufweisen,
und mit
C) einem oder mehreren Polyisocyanaten mit mindestens zwei freien Isocyanatgruppen pro Molekül in einer derartigen Menge, daß das molare Verhältnis der OH-Gruppen der Komponente A) zu den NCO-Gruppen der Komponenten B) und C) 1,01 : 1 bis 3 : 1 beträgt,
wobei die Komponenten A), Bc), Bd) und C) gleichzeitig miteinander umgesetzt werden können,
worauf das aus A), B) und C) erhaltene Prepolymere vor oder nach der teilweisen oder vollständigen Neutralisation vorhandener in anionische Gruppen überführbarer Gruppen in dem organischen Medium oder nach Überführung in die Wasserphase einer Kettenverlängerung unterzogen wird durch Umsetzung mit
D) einem oder mehreren polyfunktionellen Isocyanaten mit einer Funktionalität an freien Isocyanatgruppen von mindestens 1,8, in derartigen Anteilen, daß die erhaltenen Polyurethanharze ein Zahlenmittel der Molmasse (Mn) von 10000 bis 300000 aufweisen,
worauf gegebenenfalls vorhandene in anionische Gruppen überführbare Gruppen vollständig oder teilweise neutralisiert werden.

3. Dispersion oder Verfahren nach Anspruch 1 oder 2, dadurch gekennzeichnet, daß die Komponente Ab) eine Polyhydroxyverbindung ist.

4. Dispersion oder Verfahren nach einem der vorhergehenden Ansprüche, dadurch gekennzeichnet, daß die Komponente Ab) eine Verbindung mit zwei mit Isocyanat reaktiven Gruppen und mindestens einer blockierten NCO-Gruppe enthält.

5. Dispersion oder Verfahren nach einem der vorhergehenden Ansprüche, dadurch gekennzeichnet, daß die Komponente Bc) eine oder mehrere freie Carboxylgruppen enthält.

6. Dispersion oder Verfahren nach einem der vorhergehenden Ansprüche, dadurch gekennzeichnet, daß die Komponente B) in organischen Lösemitteln löslich ist.

7. Dispersion oder Verfahren nach einem der vorhergehenden Ansprüche, dadurch gekennzeichnet, daß die Komponente C) aliphatische, cycloaliphatische, insbesondere sterisch gehinderte Isocyanate umfaßt.

8. Dispersion oder Verfahren nach Anspruch 7, dadurch gekennzeichnet, daß nur Diisocyanate eingesetzt werden.

9. Dispersion oder Verfahren nach Anspruch 7, dadurch gekennzeichnet, daß ein Anteil an Triisocyanaten oder Polyisocyanaten von bis zu 25 Gew.-%, bezogen auf den Festkörpergehalt der gesamten Polyisocyanate der Komponente C), eingesetzt wird.

10. Wäßriges Überzugsmittel, enthaltend mindestens eine wäßrige Polyurethandispersion nach einem der Ansprüche 1 und 3 bis 9.

11. Wäßriges Überzugsmittel nach Anspruch 10, dadurch gekennzeichnet, daß als Bindemittel enthalten sind:
| | |
|---|---|
| 10 - 70 Gew.-% | einer Polyurethandispersion nach einem der Ansprüche 1 und 3 bis 9, |
| 90 - 30 Gew.-% | eines oder mehrerer weiterer wasserverdünnbarer Bindemittel, sowie |
| 0 - 20 Gew.-% | eines oder mehrerer Vernetzer oder nicht-ionischer Polymerer. |

12. Wäßriges Überzugsmittel nach Anspruch 10 oder 11, dadurch gekennzeichnet, daß ein oder mehrere wasserdispergierbare blockierte Polyisocyanate als Vernetzerkomponente enthalten sind.

13. Wäßriges Überzugsmittel nach einem der Ansprüche 10 bis 12, dadurch gekennzeichnet, daß es ein oder mehrere Metallicpigmente, Interferenzpigmente und/oder Farbpigmente sowie gegebenenfalls weitere lackübliche Additive enthält.

14. Verwendung der wäßrigen Überzugsmittel nach einem der Ansprüche 10 bis 13 zur Herstellung von Lackierungen, insbesondere Mehrschichtlackierungen von Kraftfahrzeugen und Kraftfahrzeugteilen.

15. Verfahren zur Mehrschichtlackierung, dadurch gekennzeichnet, daß auf ein Substrat eine Grundierungsschicht sowie gegebenenfalls weitere Schichten aufgebracht und anschließend eine Decklackschicht mit einem wäßrigen Überzugsmittel nach einem der Ansprüche 10 bis 13 aufgebracht werden.

16. Verfahren zur Mehrschichtlackierung, dadurch gekennzeichnet, daß auf ein Substrat eine Grundierungsschicht, sowie gegebenenfalls weitere Schichten aufgebracht werden und eine Basisschicht aus einem wäßrigen Überzugsmittel nach einem der Ansprüche 10 bis 13 aufgebracht und anschließend mit einer Klarlackschicht überlackiert wird.

17. Verfahren nach Anspruch 16, dadurch gekennzeichnet, daß zur Herstellung der Klarlackschicht ein wäßriger Klarlack verwendet wird.

## Claims

1. Aqueous dispersion of polyurethane resins containing ionic groups and no urea groups and having a number average molecular weight (Mn) of 10000 to 300000 and an acid value to 5 to 50, which dispersion is obtainable by preparing a polyurethane prepolymer containing OH groups and having an OH value to 5 to 75 and a number average molecular weight (Mn) of 5000 to 50000, by the reaction in an organic medium of
A) one or more isocyanate-reactive compounds having an acid value of 0 to 10 in the form of
a) 70 to 100 wt.% of one or more polyester diols, polyether diols and/or polycarbonate diols having a molecular weight of 500 to 6000, together with
b) 30 to 0 wt.% of one of more compounds differing from a) having at least two isocyanate-reactive groups with a molecular weight of 40 to 800, with
B) one or more reaction products containing free isocyanate groups prepared from
c) at least one compound having two isocyanate-reactive groups and at least one anionic group or group capable of forming anions and
d) one or more organic diisocyanates
in a quantity ratio such that the molar ratio of the isocyanate-reactive groups of c) to the isocyanate groups of d) is 1:1.0 to 1:4.0,
wherein the reaction product B) may be produced in the presence of component A),
wherein component B) is used in a quantity such that the finished polyurethane resins exhibit the desired acid value,
and with
C) one or more polyisocyanates having at least two free isocyanate groups per molecule in a quantity such that the molar ratio of the OH groups of component A) to the NCO groups of the components B) and C) is 1.01:1 to 3:1,
wherein components A), Bc), Bd) and C may be reacted together simultaneously,
whereupon the prepolymer obtained from A), B) and C) is subjected to chain extension before or after partial or complete neutralisation of any groups convertible into ionic groups in the organic medium or after conversion into the aqueous phase by reaction with
D) one or more polyfunctional isocyanates having a free NCO group functionality of at least 1.8 in proportions such that the finished polyurethane resins exhibit the desired number average molecular weight.

2. Process for the production of aqueous dispersions of polyurethane resins containing ionic groups and no urea groups, characterised in that in that a polyurethane prepolymer containing OH groups and having an OH value to 5 to 75 and a number average molecular weight (Mn) of 5000 to 50000 is produced by the reaction in an organic medium of
A) one or more isocyanate-reactive compounds having an acid value of 0 to 10 in the form of
a) 70 to 100 wt.% of one or more polyester diols, polyether diols and/or polycarbonate diols having a molecular weight of 500 to 6000, together with
b) 30 to 0 wt.% of one of more compounds differing from a) having at least two isocyanate-reactive groups with a molecular weight of 40 to 800, with
B) one or more reaction products containing free isocyanate groups prepared from
c) at least one compound having two isocyanate-reactive groups and at least one anionic group or group capable of forming anions and
d) one or more organic diisocyanates in a quantity ratio such that the molar ratio of the isocyanate-reactive groups of c) to the isocyanate groups of d) is 1:1.0 to 1:4.0, wherein the reaction product B) may be produced in the presence of component A),
wherein component B) is used in a quantity such that the finished polyurethane resins exhibit an acid value of 5 to 50,
and with
C) one or more polyisocyanates having at least two free isocyanate groups per molecule in a quantity such that the molar ratio of the OH groups of component A) to the NCO groups of the components B) and C) is 1.01:1 to 3:1,
wherein components A), Bc), Bd) and C may be reacted together simultaneously,
whereupon the prepolymer obtained from A), B) and C) is subjected to chain extension before or after partial or complete neutralisation of any groups convertible into ionic groups in the organic medium or after conversion into the aqueous phase by reaction with
D) one or more polyfunctional isocyanates having a free isocyanate group functionality of at least 1.8 in proportions such that the finished polyurethane resins exhibit a number average molecular weight of 10000 to 300000,
whereupon any anionic groups convertible into anionic groups present are entirely or partially neutralised.

3. Dispersion or process according to claim 1 or 2, characterised in that component Ab) is a polyhydroxy compound.

4. Dispersion or process according to one of the preceding claims, characterised in that component Ab) contains a compound having two isocyanate-reaction groups and at least one blocked NCO group.

5. Dispersion or process according to one of the preceding claims, characterised in that component Bc) contains one or more free carboxyl groups.

6. Dispersion or process according to one of the preceding claims, characterised in that component B) is soluble in organic solvents.

7. Dispersion or process according to one of the preceding claims, characterised in that component C) comprises aliphatic, cycloaliphatic, in particular sterically hindered isocyanates.

8. Dispersion or process according to claim 7, characterised in that only diisocyanates are used.

9. Dispersion or process according to claim 7, characterised in that a proportion of triisocyanates or polyisocyanates of up to 25 wt.%, relative to the solids content of all the polyisocyanates of component C), is used.

10. Aqueous coating composition containing at least one aqueous polyurethane dispersion according to one of claims 1 and 3 to 9.

11. Aqueous coating composition according to claim 10, characterised in that the following are present as binder
| | |
|---|---|
| 10-70 wt.% | of a polyurethane dispersion according to one of claims 1 and 3 to 9, |
| 90-30 wt.% | of one or more further water-dilutable binders, together with |
| 0-20 wt.% | of one or more crosslinking agents or nonionic polymers. |

12. Aqueous coating composition according to claim 10 or 11, characterised in that one or more water-dispersible, blocked polyisocyanates are present as the crosslinking component.

13. Aqueous coating composition according to one of claims 10 to 12, characterised in that it contains one or more metallic pigments, interference pigments and/or colouring pigments, optionally together with further additives conventional in lacquers.

14. Use of the aqueous compositions according to one of claims 10 to 13 for the production of lacquer coatings, in particular multi-layer lacquer coatings on motor vehicles and motor vehicle components.

15. Process for multi-layer lacquer coating, characterised in that a priming layer, optionally together with further layers and then a topcoat lacquer layer are applied onto a substrate using an aqueous coating composition according to one of claims 10 to 13.

16. Process for multi-layer lacquer coating, characterised in that a priming layer, optionally together with further layers, is/are applied onto a substrate and a base lacquer of an aqueous coating component according to one of claims 10 to 13 is applied and then overcoated with a clear lacquer layer.

17. Process according to claim 16, characterised in that an aqueous clear lacquer is used to produce the clear lacquer layer.

## Revendications

1. Dispersion aqueuse de résines de polyuréthannes contenant des groupes ioniques mais exemptes de groupes urée, à une masse moléculaire moyenne, moyenne en nombre, Mn, de 10 000 à 300 000 et un indice d'acide de 5 à 50, qu'on obtient en préparant un prépolymère de polyuréthanne à groupes OH, à un indice d'OH de 5 à 75 et une masse moléculaire moyenne, moyenne en nombre, Mn, de 5000 à 50 000, par réaction en milieu organique de
A) un ou plusieurs composés réactifs avec les isocyanates, d'indice d'acide 0 à 10, sous la forme de
a) 70 à 100 % en poids d'un ou plusieurs polyesterdiols, polyétherdiols et/ou polycarbonatediols de poids moléculaire 500 à 6000, conjointement à
b) 30 à 0 % en poids d'un ou plusieurs composés autres que ceux mentionnés sous a), à au moins deux groupes réactifs avec les isocyanates et à un poids moléculaire de 40 à 800, avec
B) un ou plusieurs produits de réaction, contenant des groupes isocyanate libres, de
c) au moins un composé à deux groupes réactifs avec les isocyanates et au moins un groupe anionique ou un groupe capable de former des anions et
d) un ou plusieurs diisocyanates organiques, dans des proportions relatives correspondant à un rapport molaire de 1:1,0 à 1:4,0 entre les groupes réactifs avec les isocyanates de c) et les groupes isocyanate de d), le produit de réaction B) pouvant être préparé en l'absence du composant A), le composant B) étant mis en oeuvre en quantité telle que les résines de polyuréthanne finies aient l'indice d'acide voulu,
et avec
C) un ou plusieurs polyisocyanates à au moins deux groupes isocyanate libres par molécule, en quantité correspondant à un rapport molaire de 1,01:1 à 3:1 entre les groupes OH du composant A) et les groupes NCO des composants B) et C);
les composants A), Bc), Bd) et C) pouvant être mis à réagir entre eux simultanément,
après quoi le prépolymère obtenu à partir de A), B) et C) est soumis, avant ou après neutralisation partielle ou totale des groupes convertibles en groupes ioniques dans le milieu organique ou après passage dans la phase aqueuse, à un allongement des chaînes par réaction avec
D) un ou plusieurs isocyanates polyfonctionnels, ayant une fonctionnalité en groupes NCO libres d'au moins 1,8, en proportions telles que les résines de polyuréthannes finies aient la masse moléculaire moyenne, moyenne en nombre, voulue.

2. Procédé de préparation de dispersions aqueuses de résines de polyuréthannes contenant des groupes ioniques mais exemptes de groupes urées, caractérisé en ce que l'on prépare un prépolymère de polyuréthanne à groupes OH, avec un indice d'OH de 5 à 75 et une masse moléculaire moyenne, moyenne en nombre, Mn, de 5000 à 50 000, par réaction en milieu organique de
A) un ou plusieurs composés réactifs avec les isocyanates, ayant un indice d'acide de 0 à 10, sous la forme de
a) 70 à 100 % en poids d'un ou plusieurs polyesterdiols et/ou polyétherdiols et/ou de poids moléculaire 500 à 6000, conjointement à
b) 30 à 0 % en poids d'un ou plusieurs composés autres que ceux mentionnés ci-dessus sous a), à au moins deux groupes réactifs avec les isocyanates et à un poids moléculaire de 40 à 800, avec
B) un ou plusieurs produits de réaction, contenant des groupes isocyanate libres, de
c) au moins un composé à deux groupes réactifs avec les isocyanates et au moins un groupe anionique ou un groupe capable de former des anions et
d) un ou plusieurs diisocyanates organiques, en quantité correspondant à un rapport molaire de 1:1,0 à 1:4,0 entre les groupes réactifs avec les isocyanates de c) et les groupes isocyanate de d), le produit de réaction B) pouvant être préparé en l'absence du composant A),
le composant B) étant mis en oeuvre en quantité telle que les résines de polyuréthanne finies aient un indice d'acide de 5 à 50,
et avec
C) un ou plusieurs polyisocyanates à au moins deux groupes isocyanate libres par molécule, en quantité correspondant à un rapport de 1,01:1 à 3:1 entre les groupes OH du composant A) et les groupes NCO des composants B) et C),
les composants A), Bc), Bd) et C) pouvant être mis à réagir entre eux simultanément,
après quoi le prépolymère obtenu à partir de A), B) et C) est soumis, avant ou après neutralisation partielle ou totale des groupes convertibles en groupes ioniques, dans le milieu organique ou après passage dans la phase aqueuse, à un allongement des chaînes par réaction avec
D) un ou plusieurs isocyanates polyfonctionnels, ayant une fonctionnalité en groupes isocyanate libres d'au moins 1,8, en quantité telle que les résines de polyuréthanne obtenues aient une masse moléculaire moyenne, moyenne en nombre, Mn, de 10 000 à 300 000,
après quoi, le cas échéant on neutralise en totalité ou en partie les groupes convertibles en groupes anioniques.

3. Dispersion ou procédé selon la revendication 1 ou 2, caractérisé en ce que le composant Ab) est un composé polyhydroxylé.

4. Dispersion ou procédé selon l'une des revendications qui précèdent, caractérisé en ce que le composant Ab) est un composé à deux groupes réactifs avec les isocyanates et contient au moins un groupe NCO bloqué.

5. Dispersion ou procédé selon l'une des revendications qui précèdent, caractérisé en ce que le composant Bc) contient un ou plusieurs groupes carboxyle libres.

6. Dispersion ou procédé selon l'une des revendications qui précèdent, caractérisé en ce que le composant B) est soluble dans les solvants organiques.

7. Dispersion ou procédé selon l'une des revendications qui précèdent, caractérisé en ce que le composant C) consiste en isocyanates aliphatiques, cycloaliphatiques, plus spécialement objets d'un empêchement stérique.

8. Dispersion ou procédé selon la revendication 7, caractérisé en ce que l'on met en oeuvre uniquement des diisocyanates.

9. Dispersion ou procédé selon la revendication 7, caractérisé en que l'on met en oeuvre une fraction de triisocyanates ou de polyisocyanates représentant jusqu'à 25 % en poids, sur les matières solides des polyisocyanates totaux du composant C).

10. Produit de revêtement aqueux contenant au moins une dispersion aqueuse de polyuréthanne selon l'une des revendications 1 et 3 à 9.

11. Produit de revêtement aqueux selon la revendication 10, caractérisé en ce que son liant consiste en :
| | |
|---|---|
| 10 à 70 % | en poids d'une dispersion de polyuréthanne selon l'une des revendications 1 et 3 à 9, |
| 90 à 30 % | en poids d'un ou plusieurs autres liants diluables à l'eau, et |
| 0 à 20 % | en poids d'un ou plusieurs agents réticulants ou polymères non ioniques. |

12. Produit de revêtement aqueux selon la revendication 10 ou 11, caractérisé en ce qu'il contient en tant que composants réticulants un ou plusieurs polyisocyanates bloqués dispersables à l'eau.

13. Produit de revêtement aqueux selon l'une des revendications 10 à 12, caractérisé en ce qu'il contient un ou plusieurs pigments à effets métalliques, pigments à interférences et/ou pigments colorés et le cas échéant d'autres additifs usuels pour peintures et vernis.

14. Utilisation des produits de revêtement aqueux selon l'une des revendications 10 à 13 pour l'application de revêtements, en particulier de revêtements à plusieurs couches, sur des véhicules et des parties de véhicules.

15. Procédé pour l'application de revêtements à plusieurs couches, caractérisé en ce que l'on applique sur un support une couche d'apprêt et le cas échéant d'autres couches puis une couche de couverture à l'aide d'un produit de revêtement aqueux selon l'une des revendications 10 à 13.

16. Procédé pour l'application d'un revêtement à plusieurs couches, caractérisé en ce que l'on applique sur un support une couche d'apprêt et le cas échéant d'autres couches puis une couche de base à l'aide d'un produit de revêtement aqueux selon l'une des revendications 10 à 13, sur laquelle on applique ensuite en superposition une couche de vernis clair.

17. Procédé selon la revendication 16, caractérisé en ce que, pour l'application de la couche de vernis clair, on utilise un vernis clair aqueux.
